# FASCICULE DE BREVET EUROPEEN

(11) **EP 3 483 665 B1**
(45) Date de publication et mention de la délivrance du brevet: **23.07.2025**
(21) Numéro de dépôt: 17201311.2
(22) Date de dépôt: 13.11.2017
(51) Int. Cl.: C04B 35/01, C04B 35/626, G04B 31/008, C04B 35/00, G04B 31/06, G04D 3/00, F16C 33/00, G04B 31/004

(54) **PROCEDE DE FABRICATION D'UNE PIERRE PERCEE**
HERSTELLUNGSVERFAHREN EINES GELOCHTEN STEINS
METHOD FOR MANUFACTURING A PIERCED JEWEL

(43) Date de publication de la demande: 15.05.2019
(73) Titulaire: Comadur S.A., 2400 Le Locle (CH)
(72) Inventeur: BESUTTI, Bruno, 25140 Charquemont (FR); CORDIER, Thierry, 1789 Lugnorre (CH); CHOPARD-LALLIER, Pascal, 25500 Montlebon (FR)
(74) Mandataire: ICB SA

(56) Documents cités:
- EP-A1- 2 778 801
- CH-A- 371 387
- CH-A- 495 801
- CH-B5- 561 924

## Description

### Domaine de l'invention

L'invention porte sur un procédé de fabrication d'une pierre percée notamment formant un coussinet d'une pièce d'horlogerie.

L'invention porte aussi sur un système de fabrication d'une pierre percée.

### Arrière-plan de l'invention

Dans l'état de la technique, les pierres percées sont notamment utilisées pour former des coussinets de pièces d'horlogerie, ces coussinets étant destinés à entrer en contact avec des pivots afin de rendre ces derniers mobiles en rotation et ce, avec un frottement minimal. Ces coussinets qui forment tout ou partie d'un palier d'un élément monté en rotation, comprennent classiquement un trou traversant communiquant avec un évidement défini dans une de ses faces formant un premier élément fonctionnel.

Un tel trou traversant est généralement réalisé lors d'un procédé de fabrication de cette pierre en particulier durant une étape de pressage d'un précurseur en vue de l'obtention d'un corps vert de la future pierre percée à partir d'un outil de pressage pourvu d'un fil participant à l'édification de ce trou. Toutefois, une telle étape de pressage n'est souvent pas adaptée à la réalisation de trous présentant de faibles diamètres qui sont par exemple inférieurs à 100 µm. En effet, lors de la réalisation de tels trous, il est courant que le fil de l'outil de pressage vienne à se briser sous l'effet de la pression exercée sur le précurseur lors de cette étape de pressage.

Pour pallier cet inconvénient, une solution consiste à réaliser un tel trou traversant à la fin du processus de fabrication de la pierre percée plus précisément lors d'une étape d'usinage consistant à prolonger une hauteur d'un élément de fonctionnel définie dans une face de cette pierre afin qu'il débouche dans une autre face opposée. Cependant, une telle solution est d'une mise en œuvre difficile car elle requiert systématiquement la réalisation d'opérations complexes, délicates et coûteuses visant à éviter tout endommagement de la pierre lors de cette étape d'usinage.

On connait aussi dans l'état de la technique les documents EP2778801A1 et CH561924B5 qui décrivent des procédés de fabrication de coussinets.

### Résumé de l'invention

Le but de la présente invention est de pallier en tout ou partie les inconvénients cités précédemment en proposant un procédé de fabrication d'une pierre percée permettant notamment la réalisation d'un trou traversant le corps de cette pierre ayant de préférence un faible diamètre par exemple inférieur à 100 µm. Dans ce contexte, un tel procédé de fabrication est répétable et ce, sans engendrer un quelconque endommagement de la pierre ou encore du système de fabrication de cette pierre.

A cet effet, l'invention porte sur un procédé de fabrication d'une pierre percée notamment formant un coussinet comprenant un trou traversant débouchant dans une surface supérieure et dans une surface inférieure de ladite pierre, ladite surface inférieure comportant un élément fonctionnel, le procédé comportant les étapes suivantes :
- réalisation d'un précurseur à partir d'un mélange d'au moins un matériau en poudre avec un liant ;
- pressage du précurseur afin de former un corps vert de la future pierre percée, ledit corps vert comprenant une cavité borgne présentant une hauteur (H2) comprise entre une hauteur (H3) du corps vert et une hauteur (H1) de la future pierre percée, la cavité étant pourvue de parties supérieure et inférieure constituant respectivement des ébauches du trou traversant et dudit élément fonctionnel de la future pierre percée, ladite étape de pressage étant réalisée à l'aide d'une matrice supérieure et d'une matrice inférieure, ladite matrice inférieure comprenant un poinçon agencé pour former soit la partie inférieure pour la réalisation de l'ébauche de l'élément fonctionnel soit la partie supérieure pour la réalisation de l'ébauche du trou traversant ;
- frittage dudit corps vert afin de former un corps de la future pierre percée dans ledit au moins un matériau, et
- usinage du corps de la future pierre percée comportant une première sous-étape de façonnage d'un sommet dudit corps visant à définir ladite surface supérieure de ladite pierre percée, ledit façonnage conduisant à la réalisation d'une ouverture menant à l'ébauche du trou traversant permettant de relier l'ébauche de l'élément fonctionnel à ladite surface supérieure, ledit usinage comportant aussi une deuxième sous-étape de façonnage d'une base du corps lors de laquelle une hauteur (H4) de la partie inférieure comprenant l'ébauche de l'élément fonctionnel est configurée.

Ainsi grâce à ces caractéristiques, un trou traversant de n'importe quel diamètre (en particulier d'un faible diamètre par exemple inférieur à 100 µm) et un élément fonctionnel peuvent être réalisés sans l'utilisation d'outils de perçage tels qu'un fil d'un outil de pressage ou encore un laser et ce, grâce notamment à l'application du poinçon, présent sur la matrice inférieure, dans le précurseur d'un corps vert de la future pierre percée qui permet de définir les ébauches de ce trou traversant et de l'élément fonctionnel dans le corps vert, et à l'étape d'usinage simplifiée permettant de configurer la hauteur de l'élément fonctionnel et la réalisation d'une ouverture du trou traversant dans la surface supérieure de la pierre percée.

Dans d'autres modes de réalisation :
- les parties supérieure et inférieure sont de formes différentes ;
- la partie supérieure de la cavité a une forme essentiellement cylindrique et la partie inférieure une forme conique ;
- la cavité borgne comprend une ouverture qui est définie dans une face inférieure dudit corps vert ;
- la deuxième sous-étape de façonnage comprend une phase de calibrage d'un diamètre du trou traversant ;
- le matériau en poudre est à base de céramique et comporte au moins un oxyde métallique, un nitrure métallique ou un carbure métallique ;
- le matériau en poudre à base de céramique comporte de l'oxyde d'aluminium ;
- le matériau en poudre à base de céramique comporte en outre de l'oxyde de chrome ;
- l'étape de pressage est réalisée par rapprochement des matrices supérieure et inférieure dans un carter ;
- l'étape de frittage comporte une pyrolyse ;
- le procédé comporte une étape finale de finissage de la pierre percée ;
- l'étape finale de finissage comporte un rodage et/ou un brossage et/ou un polissage.

L'invention porte aussi sur un système de fabrication d'une pierre percée notamment formant un coussinet mettant en œuvre ce procédé et comprenant :
- un dispositif de réalisation d'un précurseur à partir d'un mélange d'au moins un matériau en poudre avec un liant ;
- un dispositif de pressage du précurseur comprenant des matrices supérieure et inférieure agencées mobiles dans un carter contribuant à former un corps vert de la future pierre percée, la matrice inférieure comprenant un poinçon destiné à former une cavité borgne dans ledit corps vert ;
- un dispositif de frittage dudit corps vert ;
- un dispositif d'usinage d'un corps de la future pierre percée ;
- ledit poinçon comprenant une partie principale inférieure ayant une forme conique destinée à former un élément fonctionnel de la future pierre percée et une partie distale supérieure essentiellement cylindrique pourvue d'une pointe, ledit poinçon présentant une hauteur destinée à dépasser la hauteur de la future pierre percée.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation de la pierre percée formant un coussinet selon un mode de réalisation;
- la figure 2 est une vue à plus grande échelle d'une partie B de la figure
- la figure 3 est une représentation schématique d'un système de fabrication d'une pierre percée selon le mode de réalisation de l'invention ;
- la figure 4 est une vue schématique d'un dispositif de pressage du système selon le mode de réalisation de l'invention ;
- la figure 5 est un logigramme relatif à un procédé de fabrication d'une pierre percée selon le mode de réalisation de l'invention ;
- la figure 6 est une représentation schématique d'un corps vert de la future pierre percée selon le mode de réalisation de l'invention ;
- la figure 7 est une représentation schématique d'un volume final de la pierre percée frittée au sein du volume du corps vert selon le mode de réalisation de l'invention, et
- la figure 8 est une représentation schématique d'une pièce d'horlogerie selon le mode de réalisation;

### Description détaillée des modes de réalisation préférés

Comme expliqué ci-dessus, l'invention se rapporte à une pierre percée 2 susceptible de former un coussinet d'une pièce d'horlogerie 27 destinée à entrer en contact avec un pivot afin de rendre ce dernier mobile en rotation avec un frottement minimal. On comprend donc que la présente invention permet de réaliser une pierre percée 2 pouvant former tout ou partie d'un palier d'un élément monté en rotation.

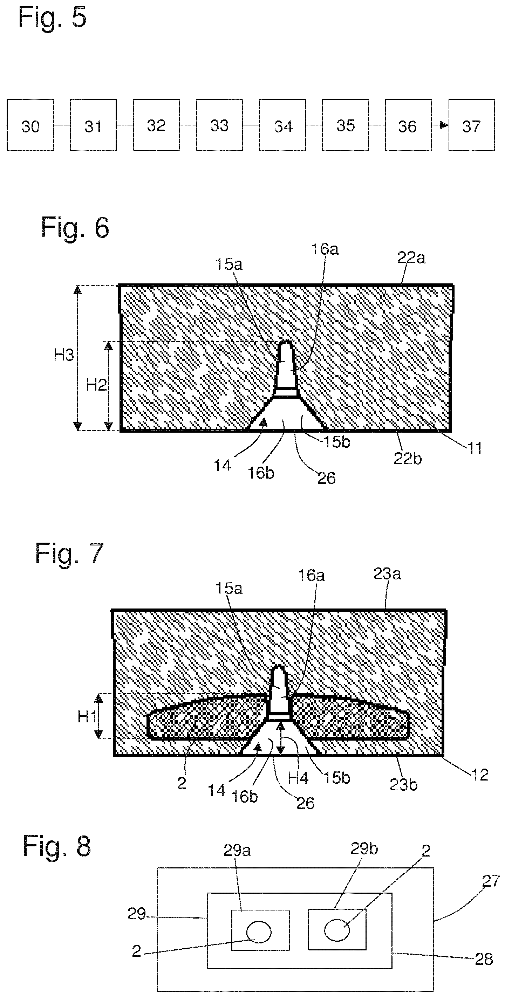

Selon l'invention, un tel coussinet comprenant ou encore constitué de cette pierre percée 2, est destiné à être monté dans une platine 29a ou un pont 29b ou à former tout ou partie d'une platine 29a ou d'un pont 29b de mouvement horloger 28 d'une pièce d'horlogerie 27 visible sur la figure 8. Toutefois, une telle pierre percée 2 ne saurait se limiter au domaine horloger et peut s'appliquer à tout élément monté mobile par rapport à un palier.

Avantageusement selon l'invention, la pierre percée 2 comporte un corps qui est traversé par un trou 20 destiné à recevoir le pivot, également appelé tourillon. Le corps comporte, de manière avantageuse selon l'invention, une surface supérieure 21a et une surface inférieure 21b dont une comprend un élément fonctionnel 19 communiquant avec ce trou traversant 20.

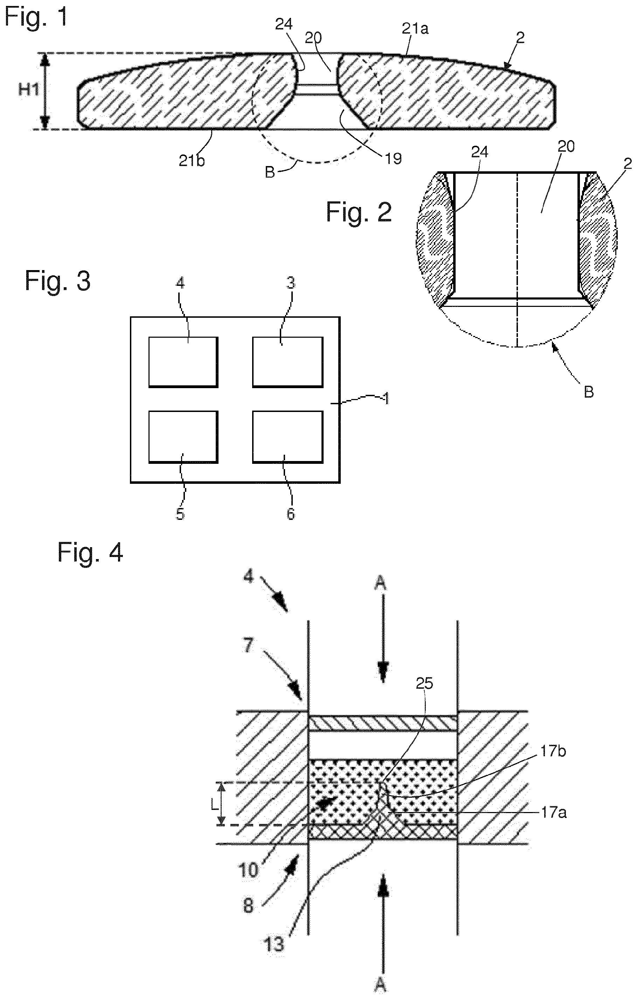

Les figures 1 et 2 présentent un exemple de pierre percée 2 selon l'invention. Cette pierre percée 2 comporte un corps généralement annulaire pourvu du trou traversant 20, préférentiellement centré, débouchant dans la surface supérieure 21a et dans l'élément fonctionnel 19 compris dans la surface inférieure 21b de ladite pierre 2. Autrement dit, le trou 20 communique avec la surface supérieure 21a et avec aussi un évidement sensiblement conique défini dans la surface inférieure 21b et qui comprend donc cet élément fonctionnel 19. Cet élément fonctionnel 19 forme alors un cône d'engagement de la pierre percée 2. On remarque également qu'une paroi interne 24 du corps de cette pierre définie au niveau du trou 20 comporte une zone arrondie destinée à minimiser le contact avec le pivot mais également à faciliter une éventuelle lubrification. On notera que la minimisation du contact avec le pivot permet notamment de diminuer les frottements avec le pivot.

On notera que cette pierre percée 2 comprend un élément fonctionnel 19 également défini sur la surface supérieure 21a et peut comprendre plusieurs éléments fonctionnels identiques ou non formés sur une même surface 21a, 21b de la pierre percée 2. De même on notera que l'élément fonctionnel 19 ne saurait se limiter à un évidement sensiblement conique mais avoir une forme différente ou former plusieurs formes combinées.

En référence à la figure 3, l'invention porte aussi sur un système de fabrication 1 de la pierre percée 2. Ce système 1 comprend au moins les différents dispositifs suivants :
- un dispositif de réalisation 3 d'un précurseur 10 à partir d'un mélange d'au moins un matériau en poudre avec un liant ;
- un dispositif de pressage 4 du matériau précurseur 10 comprenant des matrices supérieure et inférieure 7, 8 agencées mobiles dans un carter 9 contribuant à former un corps vert 11 de la future pierre percée 2 ;
- un dispositif de frittage 5 dudit corps vert 11, et
- un dispositif d'usinage 6 du corps 12 de la future pierre percée 2 issu du frittage du corps vert 11.

On notera qu'au moins deux de ces dispositifs 3 à 6 peuvent former ensemble une même entité du système 1.

Dans le dispositif de pressage 4 visible sur la figure 4, chaque matrice 7, 8 est fixée sur une presse double effet. Selon l'invention, une des matrices 7, 8 (ou les deux) est rapprochée de l'autre selon les directions A dans le carter 9 de ce dispositif de pressage 4 afin de former non seulement des faces supérieure et inférieure 22a, 22b d'un corps vert 11 de la future pierre percée 2 mais également des parois externes de ce corps 11. Dans ce dispositif de pressage 4, ces matrices 7, 8 sont sensiblement planes et la matrice inférieure 8 comporte un poinçon 13 destiné à former une cavité borgne 14 dans le corps vert 11. Ce poinçon 13 comprend une partie principale 17a ayant une forme conique et une partie distale 17b essentiellement cylindrique qui est pourvue d'une pointe 25. La partie principale 17a et la partie distale 17b sont destinées à former respectivement la partie inférieure 15b et la partie supérieure 15a de la cavité borgne 14. La pointe 25 de la partie distale 17b est quant à elle prévue pour former le fond de cette cavité 14. Le poinçon 13 présente une hauteur L qui est supérieure ou sensiblement supérieure à une hauteur H1 de la future pierre percée 2. Autrement dit, la hauteur L de ce poinçon 13 est comprise entre une hauteur H3 du corps vert 11 et la hauteur H1 de la future pierre percée 2. Cette hauteur L est strictement inférieure à la hauteur H3 du corps vert 11. On notera que dans une variante, la hauteur L de ce poinçon 13 peut être sensiblement égale ou égale à la hauteur H1 de la pierre percée 2 visible sur la figure 1.

Un tel système 1 est apte à mettre en œuvre un procédé de fabrication de la pierre percée 2 représenté sur la figure 5. Un tel procédé comporte une étape de réalisation 30 d'un précurseur 10 à partir d'un mélange d'au moins un matériau en poudre avec un liant. Ce matériau peut être de manière non limitative et non exhaustive de la céramique. Cette étape 30 est destinée à former un précurseur 10 céramique à partir d'une poudre à base de céramique prise dans le liant.

Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium afin de former du saphir synthétique ou un mélange d'oxyde d'aluminium et d'oxyde de chrome afin de former du rubis synthétique. De plus, le liant peut être de natures variées comme, par exemple, de types polymères ou de types organiques.

Le procédé comporte une étape de pressage 31 du précurseur 10 à partir de la matrice supérieure 7 et de la matrice inférieure 8 du dispositif de pressage 4 afin de former le corps vert 11 de la future pierre percée 2 visible sur la figure 6. Ce corps vert 11 comprend la cavité borgne 14 pourvue des parties supérieure et inférieure 15a, 15b qui sont de formes différentes. En effet, la partie inférieure 15b qui constitue l'ébauche de l'élément fonctionnel 16b a une forme conique et la partie supérieure 15a qui comprend l'ébauche du trou traversant 16a à une forme cylindrique, cette ébauche du trou 16a comprend un fond de la cavité 14. Une telle cavité 14 comprend aussi une ouverture 26 définie dans le corps vert 11 et débouchant dans la face inférieure 22b de ce corps vert 11. On notera qu'une telle ébauche de l'élément fonctionnel 16b permet notamment de former le cône d'engagement de la pierre percée 2 pour un montage plus aisé du pivot notamment lorsqu'il s'agit de le monter à l'aveugle dans la pierre percée 2 formant dans cet exemple un coussinet. On comprend donc que la forme de l'élément fonctionnel 19 sur la surface inférieure 21b de la pierre percée 2 est directement apportée par la forme du poinçon 13 de la matrice inférieure 8 notamment de sa partie principale 17a, sans que la future pierre percée 2 en soit fragilisée. Autrement dit, une telle étape de pressage 31 est destinée à compresser, à l'aide de la matrice supérieure 8 et la matrice inférieure 7, le précurseur 10 afin de former ledit corps vert 11 de la future pierre percée 2 avec la face inférieure 22b de ce corps 11 qui comprend notamment l'ébauche de l'élément fonctionnel 16b.

Dans cette configuration, la cavité 14 a une hauteur H2 qui est égale ou sensiblement égale à celle du poinçon 13 car ils ont tous deux des formes complémentaires. Dans ces conditions, la hauteur H2 de cette cavité 14 est supérieure ou sensiblement supérieure à la hauteur H1 de la future pierre percée 2. Autrement dit, la hauteur H2 de cette cavité 14 est comprise entre la hauteur H3 du corps vert 11 et la hauteur H1 de la future pierre percée 2. Cette hauteur H2 est strictement inférieure à la hauteur H3 du corps vert 11. On notera que dans une variante, la hauteur H2 de cette cavité 14 peut être sensiblement égale ou égale à la hauteur H1 de la pierre percée 2.

Le procédé comporte une étape de frittage 32 du corps vert 11 afin de former un corps 12 de la future pierre percée 2 dans le matériau qui peut être ainsi que nous l'avons évoqué précédemment, de la céramique (visible sur la figure 7). Autrement dit, cette étape 32 est destinée à fritter le corps vert 11 afin de former un corps 12 en céramique de la future pierre percée 2. Préférentiellement selon l'invention, l'étape de frittage 32 peut comporter une pyrolyse.

Enfin, le procédé comporte une étape d'usinage 33 du corps 12 de la future pierre percée 2. Cette étape 33 comprend une première sous-étape de façonnage 34 d'un sommet 23a dudit corps 12 visant à définir la surface supérieure 21a de ladite pierre percée 2 prévoyant. Lors du déroulement de cette sous étape 34, une ouverture est réalisée dans l'ébauche du trou traversant 16a permettant de relier l'élément fonctionnel 16b à la surface supérieure 21a. Cette étape 33 comprend aussi une deuxième sous-étape de façonnage 35 d'une base 23b du corps 12 lors de laquelle une hauteur H4 de la partie inférieure 15a comprenant l'ébauche de l'élément fonctionnel 16b est configurée. Cette hauteur H4 est configurée selon la hauteur désirée que l'on souhaite donner au cône d'engagement de la pierre percée 2 et qui peut être définie selon les caractéristiques du pivot qui est prévu pour coopérer avec l'élément fonctionnel 19 de la pierre 2. Cette deuxième sous-étape de façonnage 35 peut comprendre une phase de calibrage 36 du diamètre du trou traversant 20 permettant ainsi de configurer ce diamètre du trou 20.

L'étape d'usinage 33 est préférentiellement réalisée à l'aide d'un rayonnement destructif du type laser afin d'obtenir une gravure très précise. Toutefois, cette étape 33 peut être obtenue à l'aide d'autres types de processus comme, par exemple, un retrait mécanique tel qu'un perçage mécanique ou une découpe à eau haute pression.

Le procédé peut également comporter une étape de finition 37 de la pierre percée 2. Une telle étape de finition 37 peut ainsi comporter un rodage et/ou un brossage et/ou un polissage permettant l'ajustage des cotes finales et/ou le retrait d'arêtes et/ou la modification locale de la rugosité.

On notera qu'un tel procédé ne requiert pas forcément d'opérations d'olivage ou de chanfreinage de la pierre percée 2 du fait notamment de la forme particulière du poinçon 13 qui permet de définir dans cette pierre à la fois l'élément fonctionnel 19 et le trou traversant 20.

Bien entendu, la présente invention ne se limite pas à l'exemple illustré mais est susceptible de diverses variantes et modifications qui apparaîtront à l'homme de l'art. En particulier, d'autres types d'éléments fonctionnels formés par d'autres géométries de poinçons et/ou de matrices 7, 8 peuvent être envisagés avantageusement selon l'invention telle que définie par les revendications annexées.

## Revendications

1. Procédé de fabrication d'une pierre percée (2) notamment formant un coussinet comprenant un trou traversant (20) débouchant dans une surface supérieure (21a) et dans une surface inférieure (21b) de ladite pierre, ladite surface inférieure (21b) comportant un élément fonctionnel (19), le procédé comportant les étapes suivantes :
- réalisation (30) d'un précurseur (10) à partir d'un mélange d'au moins un matériau en poudre avec un liant ;
- pressage (31) du précurseur (10) afin de former un corps vert (11) de la future pierre percée (2), ledit corps vert comprenant une cavité borgne (14) présentant une hauteur (H2) comprise entre une hauteur (H3) du corps vert (11) et une hauteur (H1) de la future pierre percée (2), la cavité (14) étant pourvue de parties supérieure et inférieure (15a, 15b) constituant respectivement des ébauches (16a, 16b) du trou traversant (20) et dudit élément fonctionnel (19) de la future pierre percée (2), ladite étape de pressage étant réalisée à l'aide d'une matrice supérieure (7) et d'une matrice inférieure (8), ladite matrice inférieure (8) comprenant un poinçon (13) agencé pour former soit la partie inférieure (15b) pour la réalisation de l'ébauche de l'élément fonctionnel (16b) soit la partie supérieure (15a) pour la réalisation de l'ébauche du trou traversant (16a) ;
- frittage (32) dudit corps vert (11) afin de former un corps (12) de la future pierre percée (2) dans ledit au moins un matériau, et
- usinage (33) du corps (12) de la future pierre percée (2) comportant une première sous-étape de façonnage (34) d'un sommet (23a) dudit corps (12) visant à définir ladite surface supérieure (21a) de ladite pierre percée (2), ledit façonnage conduisant à la réalisation d'une ouverture menant à l'ébauche du trou traversant (16a) permettant de relier l'ébauche de l'élément fonctionnel (16b) à ladite surface supérieure (21a), ledit usinage comportant aussi une deuxième sous-étape de façonnage (35) d'une base (23b) du corps (12) lors de laquelle une hauteur (H4) de la partie inférieure (15a) comprenant l'ébauche de l'élément fonctionnel (16b) est configurée.

2. Procédé selon la revendication précédente, **caractérisé en ce que** les parties supérieure et inférieure (15a, 15b) sont de formes différentes.

3. Procédé selon la revendication précédente, **caractérisé en ce que** la partie supérieure (15a) de la cavité (14) a une forme essentiellement cylindrique et la partie inférieure (15b) une forme conique.

4. Procédé selon l'une des revendications 1 à 3, **caractérisé en ce que** la cavité borgne (14) comprend une ouverture (26) qui est définie dans une face inférieure (22b) dudit corps vert (11).

5. Procédé selon l'une des revendications 1 à 4, **caractérisé en ce que** la deuxième sous-étape de façonnage (35) comprend une phase de calibrage (36) d'un diamètre du trou traversant (20).

6. Procédé selon l'une des revendications 1 à 5, **caractérisé en ce que** le matériau en poudre est à base de céramique et comporte au moins un oxyde métallique, un nitrure métallique ou un carbure métallique.

7. Procédé selon la revendication précédente, **caractérisé en ce que** le matériau en poudre à base de céramique comporte de l'oxyde d'aluminium.

8. Procédé selon la revendication précédente, **caractérisé en ce que** le matériau en poudre à base de céramique comporte en outre de l'oxyde de chrome.

9. Procédé selon l'une des revendications 1 à 8, **caractérisé en ce que** l'étape pressage (31) est réalisée par rapprochement des matrices supérieure et inférieure (7, 8) dans un carter (9).

10. Procédé selon l'une des revendications 1 à 9, **caractérisé en ce que** l'étape frittage (32) comporte une pyrolyse.

11. Procédé selon l'une des revendications 1 à 10, **caractérisé en ce qu'**il comporte une étape de finition (37) de la pierre percée (2).

12. Procédé selon la revendication précédente, **caractérisé en ce que** l'étape de finition (37) comporte un rodage et/ou un brossage et/ou un polissage.

13. Système de fabrication (1) d'une pierre percée (2) notamment formant un coussinet mettant en œuvre le procédé selon l'une des revendications 1 à 12, comprenant :
- un dispositif de réalisation (3) d'un précurseur (10) à partir d'un mélange d'au moins un matériau en poudre avec un liant ;
- un dispositif de pressage (4) du précurseur (10) comprenant des matrices supérieure et inférieure (7, 8) agencées mobiles dans un carter (9) contribuant à former un corps vert (11) de la future pierre percée (2), la matrice inférieure (8) comprenant un poinçon (13) destiné à former une cavité borgne (14) dans ledit corps vert (11) ;
- un dispositif de frittage (5) dudit corps vert (11) ;
- un dispositif d'usinage (6) d'un corps (12) de la future pierre percée (2),
- ledit poinçon (13) comprenant une partie principale (17a) inférieure ayant une forme conique destinée à former un élément fonctionnel (16b) de la future pierre percée et une partie distale (17b) supérieure essentiellement cylindrique pourvue d'une pointe (25), ledit poinçon (13) présentant une hauteur (L) destinée à dépasser la hauteur (H1) de la future pierre percée (2).

## Patentansprüche

1. Verfahren zur Herstellung eines durchbohrten Steins (2), insbesondere zur Verwendung als Lager, wobei der Stein ein Durchgangsloch (20) aufweist, das sich sowohl zur Oberseite (21a) als auch zur Unterseite (21b) öffnet, wobei die Unterseite (21b) ein Funktionselement (19) umfasst, wobei das Verfahren die folgenden Schritte umfasst:
- Erzeugen (30) eines Vorprodukts (10) aus einer Mischung aus mindestens einem pulverförmigen Material und einem Bindemittel;
- Pressen (31) des Vorprodukts (10) zur Bildung eines Grünkörpers (11) des späteren durchbohrten Steins (2), wobei der Grünkörper eine Sackbohrung (14) mit einer Höhe (H2) aufweist, die zwischen der Höhe (H3) des Grünkörpers (11) und der Höhe (H1) des späteren durchbohrten Steins (2) liegt, wobei die Sackbohrung (14) obere und untere Bereiche (15a, 15b) umfasst, die jeweils Rohformen (16a, 16b) des Durchgangslochs (20) bzw. des Funktionselements (19) des späteren Steins bilden; der Pressvorgang erfolgt mittels eines Obergesenks (7) und eines Untergesenks (8), wobei das Untergesenk (8) einen Stempel (13) enthält, der wahlweise zur Formung des unteren Bereichs (15b) für die Rohform des Funktionselements (16b) oder des oberen Bereichs (15a) für die Rohform des Durchgangslochs (16a) dient;
- Sintern (32) des Grünkörpers (11), um daraus durch Umwandlung des genannten mindestens einen Materials den Körper (12) des späteren durchbohrten Steins (2) zu erzeugen, und
- Bearbeiten (33) des Körpers (12) des zukünftigen durchbohrten Steins (2), umfassend einen ersten Unterschritt (34) zur Formgebung eines oberen Abschnitts (23a) des Körpers (12), um die obere Fläche (21a) des durchbohrten Steins (2) zu definieren, wobei durch die Formgebung eine Öffnung entsteht, die zur Freilegung der Rohform des Durchgangslochs (16a) führt und die ermöglicht, die Rohform des Funktionselements (16b) mit der oberen Fläche (21a) zu verbinden; die Bearbeitung umfasst außerdem einen zweiten Unterschritt (35) zur Formgebung eines unteren Abschnitts (23b) des Körpers (12), wobei eine Höhe (H4) des unteren Bereichs (15a), der die Rohform des Funktionselements (16b) enthält, ausgebildet wird.

2. Verfahren nach dem vorhergehenden Anspruch, **dadurch gekennzeichnet, dass** der obere Teil (15a) und der untere Teil (15b) unterschiedliche Formen aufweisen.

3. Verfahren nach dem vorhergehenden Anspruch, **dadurch gekennzeichnet, dass** der obere Teil (15a) des Hohlraums (14) im Wesentlichen zylindrisch und der untere Teil (15b) konisch ausgebildet ist.

4. Verfahren nach einem der Ansprüche 1 bis 3, **dadurch gekennzeichnet, dass** der Blindhohlraum (14) eine Öffnung (26) aufweist, die in einer Unterseite (22b) des Grünkörpers (11) angeordnet ist.

5. Verfahren nach einem der Ansprüche 1 bis 4, **dadurch gekennzeichnet, dass** der zweite Formungsschritt (35) eine Phase (26) zum Kalibrieren des Durchmessers des Durchgangslochs (20) umfasst.

6. Verfahren nach einem der Ansprüche 1 bis 5, **dadurch gekennzeichnet, dass** das pulverförmige Material keramikbasiert ist und mindestens ein Metalloxid, ein Metallnitrid oder ein Metallcarbid enthält.

7. Verfahren nach dem vorhergehenden Anspruch, **dadurch gekennzeichnet, dass** das keramikbasierte pulverförmige Material Aluminiumoxid enthält.

8. Verfahren nach dem vorhergehenden Anspruch, **dadurch gekennzeichnet, dass** das keramikbasierte pulverförmige Material ferner Chromoxid enthält.

9. Verfahren nach einem der Ansprüche 1 bis 8, **dadurch gekennzeichnet, dass** der Pressvorgang (30) durch das Zusammenführen des oberen und des unteren Gesenks (7, 8) in einem Gehäuse (9) durchgeführt wird.

10. Verfahren nach einem der Ansprüche 1 bis 9, **dadurch gekennzeichnet, dass** der Sinterschritt (32) eine Pyrolyse umfasst.

11. Verfahren nach einem der Ansprüche 1 bis 10, **dadurch gekennzeichnet, dass** das Verfahren einen Schritt (37) zur Endbearbeitung des durchbohrten Steins (2) umfasst.

12. Verfahren nach dem vorhergehenden Anspruch, **dadurch gekennzeichnet, dass** der Endbearbeitungsschritt (37) Läppen und/oder Bürsten und/oder Polieren umfasst.

13. System (1) zur Herstellung eines durchbohrten Steins (2), insbesondere zur Bildung eines Lagers, mittels des Verfahrens nach einem der Ansprüche 1 bis 12, umfassend:
- eine Vorrichtung (3) zur Herstellung eines Vorprodukts (10) aus einer Mischung von mindestens einem pulverförmigen Material mit einem Bindemittel;
- eine Vorrichtung (4) zum Pressen des Vorprodukts (10), mit oberen und unteren Gesenken (7, 8), die beweglich in einem Gehäuse (9) angeordnet sind, um einen Grünkörper (11) des zukünftigen durchbohrten Steins (2) zu formen; wobei das untere Gesenk (8) einen Stempel (13) aufweist, der zum Ausbilden eines Blindhohlraums (14) im Grünkörper (11) vorgesehen ist;
- eine Vorrichtung (5) zum Sintern des genannten Grünkörpers (11);
- eine Vorrichtung (6) zur Bearbeitung eines Körpers (12) des zukünftigen durchbohrten Steins (2);
- wobei der Stempel (13) ein konisch geformtes Hauptunterteil (17a) aufweist, das zur Ausbildung eines Funktionselements (16b) des zukünftigen durchbohrten Steins vorgesehen ist, sowie ein im Wesentlichen zylindrisches oberes Endteil (17b) mit einer Spitze (25), wobei der Stempel (13) eine Höhe (L) besitzt, die größer als die Höhe (H1) des zukünftigen durchbohrten Steins (2) ausgelegt ist.

## Claims

1. A method for manufacturing a pierced stone (2), in particular forming a bearing, comprising a through hole (20) opening into an upper surface (21a) and into a lower surface (21b) of said stone, said lower surface (21b) comprising a functional element (19), the method comprising the following steps:
- producing (30) a precursor (10) from a mixture of at least one powdered material with a binder;
- pressing (31) the precursor (10) to form a green body (11) of the future pierced stone (2), said green body comprising a blind cavity (14) with a height (H2) comprised between a height (H3) of the green body (11) and a height (H1) of the future pierced stone (2), the cavity (14) being provided with upper and lower parts (15a, 15b) respectively forming ébauches (16a, 16b) of the through hole (20) and of said functional element (19) of the future pierced stone (2), said pressing step being carried out using an upper die (7) and a lower die (8) said lower die (8) comprising a punch (13) designed to form either the lower part (15b) for making the ébauche of the functional element (16b) or the upper part (15a) for making the ébauche of the through hole (16a);
- sintering (32) said green body (11) to form a body (12) of the future pierced stone (2) from said at least one material, and
- machining (33) the body (12) of the future pierced stone (2), comprising a first sub-step (34) of shaping a top (23a) of said body (12) so as to define said upper surface (21a) of said pierced stone (2) said shaping resulting in the production of an opening leading to the ébauche of the through hole (16a) enabling the ébauche of the functional element (16b) to be joined to said upper surface (21a), said machining also comprising a second sub-step of shaping (35) a base (23b) of the body (12), in which a height (H4) of the lower part (15a) comprising the ébauche of the functional element (16b) is configured.

2. The method according to the preceding claim, **characterised in that** the upper and lower parts (15a, 15b) are of different shapes.

3. The method according to the preceding claim, **characterised in that** the upper part (15a) of the cavity (14) has an essentially cylindrical shape and the lower part (15b) a conical shape.

4. The method according to any of claims 1 to 3, **characterised in that** the blind cavity (14) comprises an opening (26) which is defined in a lower face (22b) of said green body (11).

5. The method according to any of claims 1 to 4, **characterised in that** the second shaping sub-step (35) comprises a phase (26) of calibrating a diameter of the through hole (20).

6. The method according to any of claims 1 to 5, **characterised in that** the powdered material is ceramic-based and comprises at least one metallic oxide, one metallic nitride or one metallic carbide.

7. The method according to the preceding claim, **characterised in that** the ceramic-based powdered material comprises aluminium oxide.

8. The method according to the preceding claim, **characterised in that** the ceramic-based powdered material further comprises chromium oxide.

9. The method according to any of claims 1 to 8, **characterised in that** the pressing step (30) is carried out by bringing the upper and lower dies (7, 8) together in a casing (9).

10. The method according to any of claims 1 to 9, **characterised in that** the sintering step (32) comprises pyrolysis.

11. The method according to any of claims 1 to 10, **characterised in that** the method comprises a step (37) of finishing the pierced stone (2).

12. The method according to the preceding claim, **characterised in that** the finishing step (37) comprises lapping and/or brushing and/or polishing.

13. A system (1) for manufacturing a pierced stone (2), in particular forming a bearing, using the method according any of claims 1 to 12, comprising:
- a device (3) for producing a precursor (10) from a mixture of at least one powdered material with a binder;
- a device (4) for pressing the precursor (10), comprising upper and lower dies (7, 8) movably arranged inside a casing (9) in order to form a green body (11) of the future pierced stone (2); the lower die (8) comprising a punch (13) designed to form a blind cavity (14) in said green body (11);
- a device (5) for sintering said green body (11);
- a device (6) for machining a body (12) of the future pierced stone (2),
- said punch (13) comprising a main lower part (17a) with a conical shape designed to form a functional element (16b) of the future pierced stone and an essentially cylindrical upper end part (17b) provided with a point (25), said punch (13) having a height (L) designed to exceed the height (H1) of the future pierced stone (2).
